Europäisches Patentamt

European Patent Office

Office européen des brevets

(19)

(11) **EP 0 958 250 B1**

(12) **EUROPEAN PATENT SPECIFICATION**

(45) Date of publication and mention
of the grant of the patent:
**16.10.2002 Bulletin 2002/42**

(51) Int Cl.$^7$: **C02F 3/12**, C02F 3/28

(21) Application number: **98900466.8**

(86) International application number:
**PCT/NL98/00022**

(22) Date of filing: **12.01.1998**

(87) International publication number:
**WO 98/039255 (11.09.1998 Gazette 1998/36)**

(54) **PROCESS FOR CONTROLLING A FILTER DEVICE FOR THE PURIFICATION OF CONTAMINATED AND IN PARTICULAR NITRATES CONTAINING LIQUID**

VERFAHREN ZUR KONTROLLE EINER FILTERVORRICHTUNG ZUR REINIGUNG VON VERUNREINIGTER UND INSBESONDERE NITRATHÄLTIGER FLÜSSIGKEIT

PROCEDE DE REGULATION D'UN FILTRE UTILISE DANS LA PURIFICATION D'UN LIQUIDE CONTAMINE ET NOTAMMENT D'UN LIQUIDE CONTENANT DES NITRATES

(84) Designated Contracting States:
**AT BE CH DE DK ES FI FR GB GR IE IT LI NL PT SE**

(30) Priority: **16.01.1997 NL 1005013**

(43) Date of publication of application:
**24.11.1999 Bulletin 1999/47**

(73) Proprietor: **ASTRACO BEHEER B.V.**
**2172 JB Sassenheim (NL)**

(72) Inventors:
• **ASSEN, Harry**
**NL-2172 JB Sassenheim (NL)**

• **WOUTERS, Johannes, Wilhelmus**
**NL-4141 EC Leerdam (NL)**

(74) Representative: **Hoorweg, Petrus Nicolaas**
**Arnold & Siedsma,**
**Advocaten en Octrooigemachtigden,**
**Sweelinckplein 1**
**2517 GK Den Haag (NL)**

(56) References cited:
**EP-A- 0 105 788        EP-A- 0 306 431**
**EP-A- 0 356 870        FR-A- 2 623 794**

EP 0 958 250 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The invention relates to a method for controlling a filter device for the purification of a contaminated, and in particular nitrates-containing, liquid such as industrial waste water or groundwater, which device comprises a standing vessel, the lower part of which has a downward narrowing inner wall, which vessel serves to receive a granular filter-bed, for instance in the form of a sand-bed, in addition to a pump tube standing in the filter-bed and having arranged therein a stand-pipe controllably fed with a gaseous medium such as air, a washer for the sand supported by the tube and situated above the filter-bed and a tube assembly debouching close to the bottom for supplying the liquid for filtering and cleaning.

Filtering liquids by means of a sand-bed filter is generally known. The liquid is herein transported from below through a sand-bed which is continuously cleaned in counterflow by means of a sand washer, which is fed with sand from an air-pump. This is a quite stable filtering process, wherein continuous changing of the sand is provided in order to sustain the correct filtration capacity.

Such a sand-bed filter is also used as biofilter, for instance for denitrification of the water for cleaning.

For this purpose hetero-organotrophic bacteria are used for denitrification, when the oxygen of nitrates and nitrites is used for the oxidation of organic material. Nitrate and nitrite are then substantially reduced to $N_2$ gas. In a process of continuous filtration the suspended substance is removed from the incoming water and discharged via the flush water. If this system is employed simultaneously for denitrification, two phenomena will affect the efficiency of removal of the suspended substance. Biomass growth will occur in the filter medium, which will increase the actual quantity of suspended substance for removal. Secondly, as stated, $N_2$ gas formation will occur. This results in the creation of $N_2$ bubbles which can disrupt the filtration process. The continuous filters with upward through-flow are generally much less sensitive to this complication. With a suitable adjustment of the washing system of the filter an equilibrium can be achieved between biomass growth and washing out. The fixed, ever-growing microbiota in the sand-bed are easily capable of removing nitrates and nitrites from the supply water provided the influent load of nitrates does not vary too much.

It is the intention to provide a control of a sand-bed filter according to the invention wherein it is possible to cope with strong fluctuations in the influent load.

The control according to the invention is distinguished in that the air supply in the stand-pipe is controlled such that a constant ratio is maintained between a value of the filter-bed resistance to be measured momentarily and the desired resistance thereof, wherein the desired resistance value is pre-determined from the clean-bed resistance at a determined liquid flow rate.

It has been found from tests that the air supply to the air-pump forms the most important control instrument for maintaining a quantity of biomass in the filter. A quick start-up can hereby be realized with an evolution to a stable denitrification and filtration, wherein loss of efficiency due to adaptation and growth in shock conditions can be avoided. A filter control system can be deployed by an automatic control of the air supply to the mammoth pump so that the actual bed resistance does not exceed a pre-stipulated resistance. This latter is related to the clean-bed resistance which is formulated as a function of the flow rate, grain size, bed height, temperature and porosity.

The invention is further elucidated hereinbelow in an embodiment. A diagram of a biofilter device is shown in the annexed drawing.

In this device the supply water is carried into the bottom of the filter via a pipe 1, 2 and spread over the filter bed using distributing arms 3. After the filtration 4 the purified water is drained via an overflow edge 5. Simultaneously with this upward transport of the water the sand moves uniformly in downward direction 6 as a result of the removal of sand in the bottom of cone 8, This movement is obtained by the use of an air-pump 7, which can carry a mixture of water, sand and biomass to the top of the filter 10 by a minimal admission of air by means of a measuring and control system 9, 13. In this upper part of the filter the contaminated sand is guided into the washing device. After flowing through the washing device 12 the washed sand replenishes the sand-bed, and the contaminants are discharged with the washing water at 11. The quantity of washing water is determined by the difference between the levels of the washing water 10 and the effluent 5. The quantity of pumped-up sand in the air pump and the degree of contamination also determine this washing water flow rate.

A permanent use of the filter-bed is thus ensured by the continuous discharge of the contaminants.

Said control system 13 serves to control the filter installation in order to obtain an optimum biological filtering operation under varying process conditions.

A biological sand filter generally functions optimally when a large quantity of biomass is present in the filter-bed (on the sand grains). The more biomass, the higher the denitrification capacity can be and the quicker the system can respond to fluctuations in the influent concentrations and/or influent flow rate.

In addition to a better biological activity, a certain degree of substance accumulation enhances the mechanical filtration process, whereby the filtration quality is improved. The foundation is hereby laid for a filter control for the Dynasand filter, wherein a controlled quantity of solid and biomass is continuously held in the filter-bed.

In the filtration process the degree of substance accumulation in the filter-bed can be actively influenced by changing the air supply to the mammoth pump. The quantity of air determines the quantity of sand which is cleaned per unit of time and therewith the quantity of substance momentarily present in the filter-bed.

The measuring and control system thus controls the sand circulation speed on the basis of the dirt deposit on the filter by continuous adaptation of the air injection in the mammoth pump.

The momentary dirt deposit can be indirectly related to the filter-bed resistance. For this purpose the actual bed resistance is related to the clean-bed resistance. The clean-bed resistance over the filter-bed is the hydraulic resistance over the filter-bed and is determined in practice during filtration of "clean" water, which contains no suspended substances.

The clean-bed resistance $H_o$ is primarily a function of:

o   specific diameter of the filter material ($d_o$);
o   temperature of the water (T);
o   sand-bed height (L);
o   porosity ($p_o$);
o   filtration speed (v)).

The relation between the clean-bed resistance and the stated parameters is set down in the Carman-Kozeny equation:

Clean-bed resistance

$$H_0 = 180 \cdot \frac{v}{g} \cdot \frac{1-(p_0)^2}{p_0^{\,3}} \cdot \frac{v.L}{d_0^{\,2}} \qquad (1)$$

The kinematic viscosity is determined with equation (2):

Viscosity

$$v = \frac{497.10^{-6}}{(T+42.5)^{1.5}} \qquad (2)$$

The filtration speed is defined with equation (3):

Filtration speed

$$v = \frac{Q}{N.A_f} \qquad (3)$$

with:

| | | |
|---|---|---|
| T = | water temperature | (°C) |
| $H_o$ = | clean-bed resistance | (m) |
| v = | kinematic viscosity | ($m^2$/s) |
| g = | gravitational acceleration | ($m/s^2$) |
| $P_o$ = | porosity | (-1) |
| v = | filtration speed | (m/s) |
| L = | filter-bed height | (m) |
| $d_o$ = | specific diameter | (m) |
| Q = | supply flow rate | ($m^3$/h) |
| n= | number of filters in operation | (-1) |
| $A_f$ = | filter-bed surface/filter | ($m^2$) |

For the filter control $H_{actual}$ is continuously measured and continuously compared to the clean-bed resistance under the process conditions prevailing at that moment (see equation (1)). In the control a function rule is defined with which the momentary set point value for the filter-bed resistance is calculated and compared to the actual measured value. If the value differs, the air supply to the mammoth pump is adapted by controlling a valve in the air conduit.

The control as tried out during a test is based on a linear relation between the set point value for the resistance and the clean-bed resistance, in accordance with equation (4):

$$H_{setpoint} = \alpha.H_0$$

$$\alpha = f(Q) \tag{4}$$

The function rule for the clean-bed resistance can be used in practice to determine the clean-bed resistance at any moment in time in any process condition. For this purpose a number of process parameters are included in the function rule which are independent of the actual process settings, but which are coupled to the configuration of the installation.

Referring to the equations (1), (2) and (3), the parameters are:

- specific diameter $d_o$
- porosity $p_o$
- filter-bed height $L$

These parameters are predetermined for the calibration of the function rule. Calibration takes place on the basis of clean-bed resistance measurements and the defining of a sieving curve of the filter material.

The essence of the control is based on the pursuit of a constant ratio between the actual bed resistance and the clean-bed resistance in order to ensure a certain degree of substance accumulation. In order to maintain this ratio the air supply to the mammoth pump is corrected if necessary, with the result that the sand circulation speed changes.

To determine the ratio between the actual measured filter-bed resistance and the clean-bed resistance, the following measurements as shown below take place continuously.

| Continuous measurement parameters | | | |
| --- | --- | --- | --- |
| **Parameter** | | **Unit** | **Interval** |
| Supply flow rate | (Q) | [m$^3$/h] | 15.45 |
| Actual filter-bed resistance | (H$_{actual}$) | [m] | 0.0-2.50 |

The temperature of the water is not measured continuously, but during the test research is manually adapted in the function rule.

If the measured actual value $H_{actual}$ differs from $H_{setpoint}$ the sand speed is changed by means of the air supply, wherein the value 1 is aimed for as ratio for $H_{actual}/H_{setpoint}$.

The value for $\alpha$ is varied during the research; the value moreover depends on the chosen sand fraction. The larger the sand fraction used, the higher the value for $\alpha$ which can be used before the maximum applicable resistance value is exceeded. This implies that a larger quantity of biomass will then be stored in the filter-bed.

The invention is not limited to the above described embodiment.

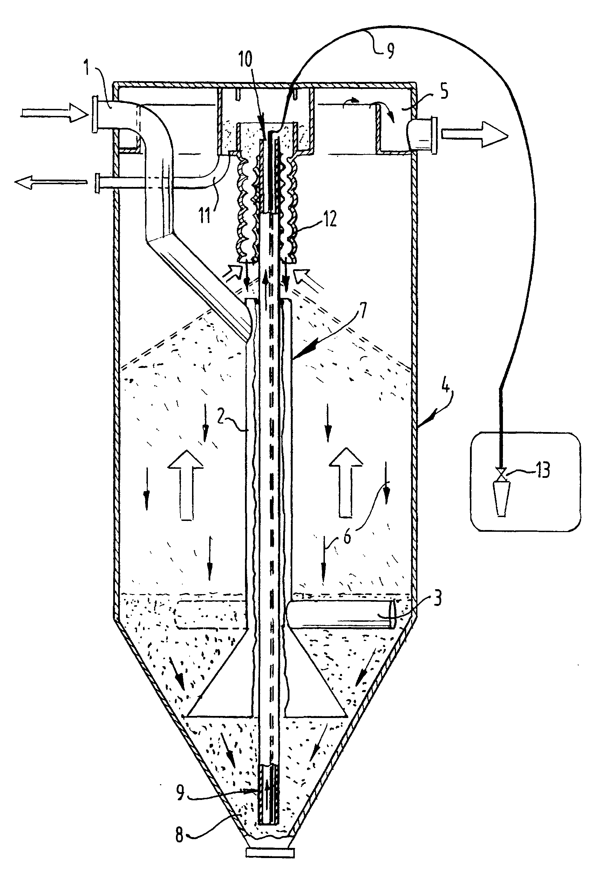

**Claims**

**1.** Method for controlling a filter device for the purification of a contaminated, and in particular nitrates-containing, liquid such as industrial waste water or groundwater, which device comprises a standing vessel, the lower part of which has a downward narrowing inner wall, which vessel serves to receive a granular filter-bed, for instance in the form of a sand-bed, in addition to a pump tube standing in the filter-bed and having arranged therein a stand-pipe controllably fed with a gaseous medium such as air, a washer for the sand supported by the tube and situated above the filter-bed and a tube assembly debouching close to the bottom for supplying the liquid for filtering and cleaning, **characterized in that** the air supply in the stand-pipe is controlled such that a constant ratio is maintained between a value of the filter-bed resistance to be measured momentarily and the desired resistance thereof, wherein the desired resistance value is pre-determined from the clean-bed resistance at a determined liquid flow rate.

**Patentansprüche**

1. Verfahren zur Steuerung einer Filtervorrichtung, die zur Reinigung von verunreinigten Flüssigkeiten, insbesondere von Nitrat enthaltenden Flüssigkeiten, zum Beispiel zur Reinigung industrieller Abwässer oder des Grundwassers dient, wobei die Filtervorrichtung ein stehendes Gefäß aufweist, dessen unterer Teil eine sich verjüngende Innenwand besitzt und das Gefäß ein Granulat-Filterbett, beispielsweise in Form eines Sandbettes und zusätzlich ein Pumpenrohr aufweist, das in dem Filterbett steht und in dem ein Standrohr angeordnet ist, das einstellbar mit einem gasförmigen Medium, beispielsweise mit Luft, gespeist wird und wobei ein Wäscher für den von dem Rohr mitgeführten Sand über dem Filterbett angeordnet ist und eine Rohranordnung in der Nähe des Bodens mündet, um die Flüssigkeit zuzuführen, die gefiltert und gereinigt werden soll,
**dadurch gekennzeichnet, daß** die Luftzufuhr im Standrohr derart gesteuert wird, daß ein konstantes Verhältnis zwischen einem Wert des augenblicklich zu messenden Filterbett-Widerstandes und einem gewünschten Widerstand hiervon aufrechterhalten wird, wobei der gewünschte Winderstandswert vorbestimmt wird aus dem Reinbett-Widerstand bei einer bestimmten Flüssigkeits-Strömungsrate.

**Revendications**

1. Procédé de régulation d'un dispositif de filtre utilisé dans la purification d'un liquide contaminé et notamment d'un liquide contenant des nitrates tel que des eaux résiduaires industrielles ou des nappes phréatiques, ce dispositif comprenant une cuve verticale, dont la partie inférieure présente une paroi interne qui se rétrécit vers le bas, cette cuve servant à recevoir un lit filtrant de graviers, par exemple sous la forme d'un lit de sable, en plus d'un tube de pompe placé verticalement dans le lit filtrant et dans lequel est agencé une colonne d'alimentation alimentée, de manière contrôlable, en un milieu gazeux comme l'air, un laveur pour le sable supporté par le tube et situé au-dessus du lit filtrant et un ensemble de tube débouchant près du fond afin d'alimenter le liquide aux fins de filtrage et de nettoyage, **caractérisé en ce que** l'alimentation en air dans la colonne d'alimentation est régulée de telle sorte qu'un rapport constant est maintenu entre une valeur de la résistance du lit filtrant qui doit être mesurée momentanément et la résistance souhaitée pour celui-ci, dans lequel la valeur de la résistance souhaitée est prédéterminée à partir de la résistance du lit de nettoyage pour un débit déterminé du liquide.